# EUROPÄISCHE PATENTSCHRIFT

(11) **EP 1 660 758 B1**
(45) Veröffentlichungstag und Bekanntmachung des Hinweises auf die Patenterteilung: **30.09.2009**
(21) Anmeldenummer: 04762660.1
(22) Anmeldetag: 14.08.2004
(51) Int. Cl.: F01D 5/34

(54) **VERFAHREN ZUR HERSTELLUNG VON GASTURBINENROTOREN MIT INTEGRALER BESCHAUFELUNG**
METHOD FOR THE PRODUCTION OF GAS TURBINE ROTORS WITH INTEGRATED BLADING
PROCEDE DE FABRICATION DE ROTORS DE TURBINES A GAZ A AUBAGE INTEGRE

(30) Priorität: 03.09.2003 DE 10340520
(43) Veröffentlichungstag der Anmeldung: 31.05.2006
(73) Patentinhaber: MTU Aero Engines GmbH, 80995 München (DE)
(72) Erfinder: KÖHLER, Christian, 85247 Oberroth (DE); MURR, Klaus, 83627 Warngau (DE); SCHAUER, Waldemar, 86415 Mering (DE)
(86) Internationale Anmeldenummer: PCT/DE2004/001815
(87) Internationale Veröffentlichungsnummer: WO 2005/024185

(56) Entgegenhaltungen:
- EP-A- 0 376 874
- EP-A- 0 887 143
- GB-A- 1 118 954
- US-A- 5 188 275
- US-A1- 2002 014 006
- US-B1- 6 233 823

## Beschreibung

Die Erfindung betrifft ein Verfahren zur Herstellung von Gasturbinenrotoren mit integraler Beschaufelung.

Gasturbinenrotoren mit integraler Beschaufelung bezeichnet man abhängig davon, ob ein im Querschnitt scheibenförmiger oder ein im Querschnitt ringförmiger Rotor bzw. Rotorträger vorhanden ist, als Blisk oder als Bling. Scheibenförmige Gasturbinenrotoren mit integraler Beschaufelung bezeichnet man als Blisk (Bladed Disk) und ringförmige Gasturbinenrotoren mit integraler Beschaufelung bezeichnet man als Bling (Bladed Ring).

Aus dem Stand der Technik ist es bekannt, Gasturbinenrotoren mit integraler Beschaufelung durch sogenanntes Fräsen aus dem Vollen herzustellen. Das Fräsen aus dem Vollen findet vor allem bei der Herstellung von relativ kleinen Gasturbinenrotoren Verwendung. So eignet sich das Fräsen aus dem Vollen insbesondere für die Serienfertigung von Blisks oder Blings mit relativ kleinen Titan-Schaufelblättern. Das Fräsen von Blisks oder Blings aus einer Nickellegierung ist wegen der schlechten Zerspanbarkeit des Werkstoffs problematisch.

US 2002/014006 A1 zeigt zudem, wie Laufschaufeln aus einer speziellen Vorform durch spanende Bearbeitung hergestellt werden können, bevor sie in einen vorbereiteten Rotorträger eingebracht werden.

EP 0 376 874 A offenbart ein weiteres Verfahren zur Herstellung vorn Gasturbinenrotoren mit integraler Beschaufelung , bei dem das Anfügen von fertigen Lauf schaufeln an den Rotorträger bzw. die Nabe durch ein geeignetes Fügeverfahren, zum Bespiel durch sogenanntes lineares Reibschweißen oder durch sogenanntes induktives Pressschweißen oder auch durch Diffusionsschweißen erfolgt. Bei der Herstellung von relativ großen Gasturbinenrotoren bzw. von Gasturbinenrotoren mit relativ großen Schaufelblättern ist das Anfügen von fertigen Laufschaufeln an den Rotorträger wirtschaftlicher und kostengünstiger als das Fräsen aus dem Vollen.

Bei dem letztgenannten, aus dem Stand der Technik bekannten Verfahren zur Herstellung von Gasturbinenrotoren mit integraler Beschaufelung werden fertige Laufschaufeln an den Rotorträger angefügt. Bei diesen fertigen Laufschaufeln handelt es sich insbesondere um Schmiedeteile, die hinsichtlich ihrer geometrischen Formgebung, insbesondere hinsichtlich ihrer Dicke, bereits an die Sollform der Laufschaufeln des Gasturbinenrotors angepasst sind. Dies bedeutet, dass nach dem Stand der Technik die an den Rotorträger angefügten, fertigen Laufschaufeln bereits weitgehend fertig bearbeitet sind. Nach dem Anfügen ist nach dem Stand der Technik lediglich eine Feinbearbeitung, nämlich eine Oberflächenbearbeitung, der fertigen Laufschaufeln erforderlich. Das Anfügen weitgehend fertig bearbeiteter Laufschaufeln an den Rotorträger erfordert eine aufwendige Adaption zwischen einem Schaufelfußansatz am Rotorträger und der fertigen Geometrie der Laufschaufel, um durch den Fügeprozess bedingte Positionsabweichungen ausgleichen zu können. Diese Adaption ist sehr aufwendig und verteuert damit die Herstellung von Gasturbinenrotoren mit integraler Beschaufelung. Weiterhin handelt es sich bei den weitgehend fertig bearbeiteten Laufschaufeln, die nach dem Stand der Technik an einen Rotorträger angefügt werden, um Bauteile, die in der Regel von externen Lieferanten teuer zugekauft werden müssen. Auch hierdurch wird die Herstellung von Gasturbinenrotoren mit integraler Beschaufelung teuer.

Zudem zeigt US 5,188,275 A, dass auch Rohlinge an einem Rotorträger gefügt werden können, die noch der gänzlichen Formgebung bedürfen und somit nach dem Fügen frästechnisch bearbeitet werden, um den Twist der Laufschaufeln herauszuarbeiten.

Hiervon ausgehend liegt der vorliegenden Erfindung das Problem zu Grunde, ein neuartiges Verfahren zur Herstellung von Gasturbinenrotoren mit integraler Beschaufelung vorzuschlagen.

Dieses Problem wird durch ein Verfahren mit den Merkmalen des unabhängigen Patentanspruchs 1 gelöst.

Erfindungsgemäß werden in einem ersten Schritt Laufschaufelrohlinge hergestellt. Anschließend wird in einem zweiten Schritt mindestens ein hergestellter Laufschaufelrohling an einen Rotorträger gefügt. In einem dritten Schritt wird der oder jede an den Rotorträger angefügte Laufschaufelrohling auf eine Sollform der oder jeder Laufschaufel bearbeitet, wobei darauffolgend in einem vierten Schritt eine Feinbearbeitung auf Endkonturen des Gasturbinenrotors mit integraler Beschaufelung erfolgt. Bei den Laufschaufelrohlingen handelt es sich erfindungsgemäß um Laufschaufelrohlinge aus einem blechförmigen oder bandförmigen Material von in etwa einheitlicher Dicke, welche nach dem Heraustrennen gewölbt und verdreht werden. Alternativ hierzu können die Laufschaufelrohlinge erfindungsgemäß auch aus einem bereits gewölbten Pressprofil von in etwa einheitlicher Dicke herausgetrennt und danach verdreht werden. Die eigentliche Formgebung, also die Anpassung der Laufschaufelrohlinge an die Sollform der Laufschaufeln, erfolgt erst nachdem die Laufschaufelrohlinge mit in etwa einheitlicher Dicke jedoch gewünschten räumlichen Twist an den Rotorträger gefügt wurden.

Auf die nach dem Stand der Technik erforderliche, aufwändige Adaption zwischen dem Schaufelfußansatz am Rotorträger und der fertigen Geometrie der Laufschaufeln kann verzichtet werden. Auch kann auf den Zukauf teuerer, weitgehend fertig bearbeiteter Laufschaufeln verzichtet werden. Die Herstellung von Gasturbinenrotoren mit integraler Beschaufelung ist hierdurch kostengünstiger möglich.

Bevorzugte Weiterbildungen der Erfindung ergeben sich aus den abhängigen Unteransprüchen und der Beschreibung. Ausführungsbeispiele der Erfindung werden, ohne hierauf beschränkt zu sein, nachfolgend näher erläutert.

Das erfindungsgemäße Verfahren zum Herstellen von Gasturbinenrotoren mit integraler Beschaufelung wird nachfolgend in größerem Detail beschrieben.

In einem ersten Schritt werden Laufschaufelrohlinge hergestellt. Die Laufschaufelrohlinge werden dadurch hergestellt, dass Rohlinge aus einem Halbzeug, nämlich aus einem blechförmigen oder bandförmigen Material von in etwa einheitlicher Dicke, herausgetrennt werden. Nach dem Heraustrennen werden diese Rohlinge von im Querschnitt in etwa einheitlicher Dicke gewölbt und anschließend verdreht. Das Wölben und Verdrehen kann auch gleichzeitig erfolgen. Durch das Wölben und Verdrehen der ursprünglich ebenen, aus dem blechförmigen oder bandförmigen Material herausgetrennten Rohlinge, werden Laufschaufelrohlinge bereitgestellt, die zwar einerseits über den Querschnitt über eine in etwa konstante Dicke verfügen, jedoch andererseits bereits eine gewünschte, räumliche bzw. dreidimensionale Ausrichtung, einen sogenannten räumlichen Twist aufweisen. Das Wölben sowie vorzugsweise anschließende Verdrehen der ursprünglich ebenen Rohlinge mit in etwa einheitlicher Dicke erfolgt vorzugsweise in einem Warmumformungsprozess. Bei der Warmumformung werden die Rohlinge vor dem Wölben und Verdrehen erwärmt. Hierdurch werden Spannungen im Laufschaufelrohling vermieden und es können Laufschaufelrohlinge mit höherwertigen Materialeigenschaften bereitgestellt werden.

Eine Alternative zum Heraustrennen aus einem band- oder blechförmigen Material besteht darin, die Rohlinge aus einem bereits gewölbten Pressprofil, nämlich aus einem bereits gewölbten Strangpressprofil, welches eine in etwa einheitliche oder auch eine variable Dicke aufweist, herauszutrennen. Werden die Rohlinge aus einem bereits gewölbten Strangpressprofil herausgetrennt, so müssen dieselben nach dem Heraustrennen lediglich zur Bereitstellung des gewünschten räumlichen Twists noch verdreht werden. Das Verdrehen erfolgt wiederum vorzugsweise als Warmumformung zur Gewährleistung höherwertiger Materialeigenschaften der Laufschaufelrohlinge.

Die auf die obige Art und Weise hergestellten Laufschaufelrohlinge mit dem gewünschten räumlichen Twist und einer vorzugsweise in etwa einheitlichen bzw. konstanten Dicke im Querschnitt werden darauffolgend in einem zweiten Schritt des erfindungsgemäßen Verfahrens an einen Rotorträger gefügt. Der Rotorträger kann als im Querschnitt scheibenförmiger oder als im Querschnitt ringförmiger Rotorträger ausgebildet sein. Bei der Verwendung eines im Querschnitt scheibenförmigen Rotorträgers ergibt sich ein sogenanntes Blisk, bei der Verwendung eines im Querschnitt ringförmigen Rotorträgers ergibt sich ein sogenannter Bling.

An dieser Stelle sei darauf hingewiesen, dass die Laufschaufelrohlinge sowie der Rotorträger vorzugsweise entweder aus einer Nickelbasislegierung oder einer Titanbasislegierung bestehen. Es können jedoch alle schweißbaren Werkstoffe, die heutzutage im Gasturbinenbau verwendet werden, mit dem erfindungsgemäßen Verfahren bearbeitet werden. Das erfindungsgemäße Verfahren eignet sich demnach sowohl zur Herstellung von integral beschaufelten Gasturbinenrotoren auf einer Nickelbasislegierung als auch zur Herstellung von Gasturbinenrotoren mit integraler Beschaufelung auf einer Titanbasislegierung oder auch Stahllegierung.

Das Fügen der Laufschaufelrohlinge an den Rotorträger erfolgt vorzugsweise über ein Schweißverfahren. Als Schweißverfahren kann das aus dem Stand der Technik bekannte, lineare Reibschweißen, das induktive Pressschweißen, das Diffusionsschweißen oder jedes sonstige bei der Bliskherstellung bislang verwendete Fügeverfahren zum Einsatz kommen.

Nach dem Fügen der Laufschaufelrohlinge an den Rotorträger erfolgt die eigentliche Formgebung der Laufschaufelrohlinge auf eine gewünschte Sollform der Laufschaufeln des Gasturbinenrotors. Hierbei werden die Laufschaufelrohlinge mit im Querschnitt noch in etwa konstanter Dicke derart bearbeitet, dass Laufschaufeln mit an die Sollform derselben angepasster, im Querschnitt variierender Dicke bereitgestellt werden.

Dies bedeutet, dass nach dieser Formgebung die Laufschaufeln in einem Randbereich oder einem Kantenbereich derselben eine andere Dicke aufweisen können als in einem mittleren Abschnitt. Die Laufschaufelrohlinge hingegen weisen durchgängig eine in etwa konstante Dicke auf. Der hierzu erforderliche Materialabtrag an den Laufschaufelrohlingen kann durch Fräsen oder elektrochemische Bearbeitung erfolgen.

Im Anschluss an die Formgebung der Laufschaufelrohlinge auf die Sollform der Laufschaufeln erfolgt noch vorzugsweise eine Feinbearbeitung auf Endkonturen, wobei die Feinbearbeitung eine Oberflächenbearbeitung der Laufschaufeln ist. Bei dieser Oberflächenbearbeitung kann es sich zum Beispiel um Gleitschleifen, chemisch unterstütztes Gleitschleifen oder Druckfließläppen handeln. Anschließend kann noch eine Oberflächenbeschichtung der Laufschaufeloberflächen oder auch des gesamten, integral beschaufelten Rotors durchgeführt werden.

Es liegt demnach im Sinne der hier vorliegenden Erfindung, Gasturbinenrotoren mit integraler Beschaufelung dadurch herzustellen, dass Laufschaufelrohlinge hergestellt werden, diese Laufschaufelrohlinge an einem Rotorträger durch ein geeignetes Fügeverfahren befestigt werden und erst im Anschluss an das Fügeverfahren die eigentliche Formgebung der Laufschaufelrohlinge auf die Sollform der Laufschaufeln erfolgt. Die Herstellung der Laufschaufelrohlinge erfolgt aus Halbzeug, entweder aus einem bandförmigen Blech oder aus einem gewölbten Strangpressprofil, wobei die Laufschaufelrohlinge im Querschnitt über eine in etwa einheitliche Dicke verfügen. Derartige Laufschaufelrohlinge sind mit geringem Aufwand kostengünstig herstellbar. Erst nach dem Fügen der Laufschaufelrohlinge an den Rotorträger werden dieselben zum Beispiel durch Fräsen auf die Sollform der Laufschaufeln gebracht.

Mithilfe des erfindungsgemäßen Verfahrens lassen sich gegenüber dem Stand der Technik zahlreiche Vorteile erzielen. So können die Herstellkosten für Gasturbinenrotoren mit integraler Beschaufelung merklich reduziert werden. Es ist nicht länger erforderlich, weitgehend fertig bearbeitete Laufschaufeln zuzukaufen oder Blisks aus dem Vollen mit erheblichem Zerspanungsaufwand herzustellen. Dies erhöht den Wertschöpfungsanteil beim Hersteller der integral beschaufelten Gasturbinenrotoren.

## Patentansprüche

1. Verfahren zur Herstellung von Gasturbinenrotoren mit integraler Beschaufelung durch Herstellen von Laufschaufelrohlingen mit darauffolgendem Fügen mindestens eines Laufschaufelrohlings an einen Rotorträger, wobei der oder jeder an den Rotorträger angefügte Laufschaufelrohling anschließend auf eine Sollform der oder jeder Laufschaufel bearbeitet und darauffolgend auf Endkonturen des Gasturbinenrotors mit integraler Beschaufelung feinbearbeitet wird, **dadurch gekennzeichnet, dass** die Laufschaufelrohlinge aus einem blechförmigen oder bandförmigen Material oder aus einem bereits gewölbten Pressprofil, insbesondere Strangpressprofil, von in etwa einheitlicher Dicke herausgetrennt und nach dem Heraustrennen gewölbt und verdreht oder, im Falle eines bereits gewölbten Press-profils, nur verdreht werden, um so Laufschaufelrohlinge mit in etwa einheitlicher Dicke jedoch gewünschtem räumlichem Twist bereitzustellen.

2. Verfahren nach Anspruch 1, **dadurch gekennzeichnet, dass** das Wölben und/oder das Verdrehen zur Bereitstellung des gewünschten Twists als Warmumformung durchgeführt wird, wobei der herausgetrennte Rohling zum Wölben und/oder Verdrehen erwärmt wird.

3. Verfahren nach Anspruch 1 oder 2, **dadurch gekennzeichnet, dass** Laufschaufelrohlinge mit im Querschnitt in etwa einheitlicher Dicke hergestellt werden.

4. Verfahren nach Anspruch 1 oder 3, **dadurch gekennzeichnet, dass** das Fügen des oder jeden Laufschaufelrohlings an den Rotorträger durch lineares Reibschweißen oder durch induktives Pressschweißen oder durch Diffusionsschweißen erfolgt.

5. Verfahren nach einem oder mehreren der Ansprüche 1 bis 4, **dadurch gekennzeichnet, dass** die Laufschaufelrohlinge im Querschnitt in etwa einheitlicher Dicke einer Formgebung unterzogen werden, um Laufschaufeln mit an die Sollform derselben angepasster, im Querschnitt variierender Dicke bereitzustellen.

6. Verfahren nach Anspruch 5, **dadurch gekennzeichnet, dass** hierzu die an den Rotorträger gefügten Laufschaufelrohlinge einer Fräsbearbeitung oder einer elektrochemischen Bearbeitung unterzogen werden.

7. Verfahren nach einem oder mehreren der Ansprüche 1 bis 6, **dadurch gekennzeichnet, dass** die Feinbearbeitung auf Endkonturen als Oberflächenbearbeitung durchgeführt wird.

8. Verfahren nach Anspruch 7, **dadurch gekennzeichnet, dass** die Oberflächenbearbeitung als Gleitschleifen oder Druckfließläppen durchgeführt wird.

## Claims

1. Method for the production of gas turbine rotors with integral blading comprising the production of turbine blade blanks followed by the fitting of at least one turbine blade blank to a rotor support, wherein the or each turbine blade blank fitted to the rotor support is subsequently machined to a specified shape of the or of each turbine blade and then finish-machined to produce final contours of the gas turbine rotor with integral blading, **characterised in that** the turbine blade blanks are separated out from a sheet or strip material or from an already dished pressed section, in particular an extruded section, of approximately uniform thickness and then dished or, if an already dished section is used, only twisted to provide turbine blade blanks of approximately uniform thickness but with the desired three-dimensional twist.

2. Method according to claim 1, **characterised in that** the dishing and/or the twisting to provide the desired twist is carried out in a hot forming process, wherein the separated-out blank is heated for dishing and/or twisting.

3. Method according to claim 1 or 2, **characterised in that** turbine blade blanks of approximately uniform cross-sectional thickness are produced.

4. Method according to claim 1 or 3, **characterised in that** the fitting of the or of each turbine blade blank to the rotor support is carried out in a linear friction welding process, an inductive pressure welding process or a diffusion welding process.

5. Method according to one or more of claims 1 to 4, **characterised in that** the turbine blade blanks with their approximately uniform cross-sectional thickness are subjected to a forming process to produce turbine blades of varying cross-sectional thickness matching their specified shape.

6. Method according to claim 5, **characterised in that** the turbine blade blanks fitted to the rotor support are subjected to milling or electro-chemical machining for this purpose.

7. Method according to one or more of claims 1 to 6, **characterised in that** the finish-machining to produce the final contours is carried out in a surface machining process.

8. Method according to claim 7, **characterised in that** the surface machining is carried out in a barrel finishing or in a pressure flow lapping process.

## Revendications

1. Procédé de fabrication de rotors de turbines à gaz à aubage intégral par la fabrication d'ébauches d'aubes avec un assemblage consécutif d'au moins une ébauche d'aube sur un support de rotor, ladite ou chaque ébauche d'aube assemblée sur le support de rotor étant ensuite usinée selon une forme théorique de ladite ou de chaque aube, et par la suite usinée précisément selon les contours définitifs du rotor de turbine à gaz à aubage intégral, **caractérisé en ce que** les ébauches d'aubes sont découpées dans un matériau de type tôle ou de type ruban ou dans un profilé compressé déjà courbé, en particulier un profilé extrudé, d'une épaisseur approximativement homogène, et après le découpage, elles sont courbées et tordues, ou dans le cas d'un profilé compressé déjà courbé tordues seulement, afin de fournir ainsi des ébauches d'aubes d'une épaisseur approximativement homogène mais avec une torsion tridimensionnelle souhaitée.

2. Procédé selon la revendication 1, **caractérisé en ce que** la courbure et/ou la torsion pour la fourniture de la torsion souhaitée est/sont effectuée(s) comme un formage à chaud, dans lequel l'ébauche découpée est chauffée pour être courbée et/ou tordue.

3. Procédé selon la revendication 1 ou 2, **caractérisé en ce que** des ébauches d'aubes ayant une section transversale d'une épaisseur approximativement homogène sont fabriquées.

4. Procédé selon la revendication 1 ou 3, **caractérisé en ce que** l'assemblage de ladite ou de chaque ébauche d'aube s'effectue sur le support de rotor par soudage par friction linéaire ou par soudage par pression inductif ou par soudage par diffusion.

5. Procédé selon une ou plusieurs des revendications 1 à 4, **caractérisé en ce que** les ébauches d'aubes sont soumises en section transversale sur une épaisseur approximativement homogène à un façonnage pour fournir des aubes d'une épaisseur adaptée à leur forme théorique et variable en section transversale.

6. Procédé selon la revendication 5, **caractérisé en ce qu'**à cet effet, les ébauches d'aubes assemblées sur le support de rotor sont soumises à un fraisage ou à un usinage électrochimique.

7. Procédé selon l'une quelconque des revendications 1 à 6, **caractérisé en ce que** l'usinage de précision selon les contours définitifs est effectué comme un traitement de surface.

8. Procédé selon la revendication 7, **caractérisé en ce que** le traitement de surface est effectué comme un ponçage ou un rodage abrasif.
